# EUROPÄISCHE PATENTSCHRIFT

(11) **EP 4 370 275 B1**
(45) Veröffentlichungstag und Bekanntmachung des Hinweises auf die Patenterteilung: **05.11.2025**
(21) Anmeldenummer: 22747579.5
(22) Anmeldetag: 14.07.2022
(51) Int. Cl.: B23K 9/095, B23K 9/167, B23K 9/028, B23K 9/09, B23K 101/06

(54) **VERFAHREN ZUM FÜGEN ZWEIER METALLISCHER, ROHRFÖRMIGER FÜGEPARTNER SOWIE EIN ENTSPRECHENDES SCHWEISSGERÄT**
METHOD FOR JOINING TWO METALLIC, TUBULAR JOINT PARTNERS AND A CORRESPONDING WELDING DEVICE
PROCEDE D'ASSEMBLAGE DE DEUX JOINTS TUBULAIRES METALLIQUES ET DISPOSITIF DE SOUDAGE CORRESPONDANT

(30) Priorität: 16.07.2021 DE 102021118461
(43) Veröffentlichungstag der Anmeldung: 22.05.2024
(73) Patentinhaber: Viega Technology GmbH & Co. KG, 57439 Attendorn (DE)
(72) Erfinder: NEUBAUER, Franziska, 57439 Attendorn (DE); MÄNKEN, Frank, 24558 Henstedt-Ulzburg (DE); MÜLLER, Andreas, 57258 Freudenberg (DE); BUCHHOLZ, Guido, 52078 Aachen (DE); ANGERHAUSEN, Matthias, 47800 Krefeld (DE); EBERT, Benjamin, 52072 Aachen (DE)
(74) Vertreter: Cohausz & Florack
(86) Internationale Anmeldenummer: PCT/DE2022/100505
(87) Internationale Veröffentlichungsnummer: WO 2023/284917

(56) Entgegenhaltungen:
- DE-A1- 3 545 158
- GB-A- 1 170 113
- JP-A- 2010 253 488
- JP-A- 2012 236 217
- US-A1- 2006 213 893
- US-A1- 2021 053 135
- US-A1- 2021 060 680
- FRIEDRICH K KRÃ1?4GER: "Vollmechanisches Wolfram-Inertgas-SchweiÃ en bei der Montage von Hochdruckrohrleitungen", SCHWEIÃ EN UND SCHNEIDEN,, vol. 27, no. 2, 1 January 1975 (1975-01-01), pages 61 - 64, XP001340014
- CABORN A: "Fabrication of the Astute class submarine", WELDING AND CUTTING, DVS, no. 6, 1 January 2009 (2009-01-01), pages 338 - 341, XP001550071, ISSN: 1612-3433
- WADE E TROYER: "U.S. developments in TIG welding", METAL CONSTRUCTION AND BRITISH WELDING JOURNAL,, vol. 41, no. 10, 1 October 1972 (1972-10-01), pages 376 - 378, XP001341290

## Beschreibung

Die Erfindung geht aus von einem Verfahren zum Fügen zweier metallischer rohrförmiger Fügepartner miteinander, wobei das Verfahren das überlappende oder stirnseitige Anordnen zweier metallischer, rohrförmiger Fügepartner zueinander und das stoffschlüssige Fügen der Fügepartner entlang einer Fügezone der Fügepartner aufweist. Ein Verfahren mit den Merkmalen des Oberbegriffs des Anspruchs 1 ist in der US 2021 / 053135 A1 und der US 2006 / 213893 A1 beschrieben. Ein weiteres Verfahren sowie ein entsprechendes Schweißgerät sind aus der EP 3650157 A1 bekannt.

Für das Fügen von Rohrleitungen haben sich beispielsweise das WIG-Stumpfschweißen für Stahlrohre, das Hartlöten mithilfe von Lötfittings oder das Kapillarlöten bei Kupferrohren etabliert. Bei den stoffschlüssigen Fügeverfahren ist es erforderlich, dass die miteinander zu verbindenden rohrförmigen Fügepartner für den Fügevorgang mit einem Schutzgas gefüllt werden, um die Nahtqualität zu gewährleisten und Anlauffarben zumindest weitestgehend zu vermeiden.

Es ist daher die Aufgabe der Erfindung, das eingangs beschriebene Verfahren sowie ein entsprechendes Schweißgerät derart weiterzuentwickeln, dass auf die Befüllung der miteinander zu fügenden, rohrförmigen Fügepartner mit einem Schutzgas verzichtet werden kann, wobei gleichzeitig die Ausbildung von Anlauffarben zumindest weitestgehend unterdrückt werden soll.

Diese Aufgabe wird durch ein Verfahren mit den Merkmalen des Anspruchs 1 gelöst.

Ein entsprechendes Schweißgerät ist Gegenstand des nebengeordneten Anspruchs 13. Vorteilhafte Ausführungsformen der Erfindung sind jeweils in den abhängigen Ansprüchen beschrieben.

Bei einem Verfahren zum Fügen zweier metallischer, rohrförmiger Fügepartner der eingangs beschriebenen Art ist vorgesehen, dass bei dem Fügen eine in Umfangsrichtung der Fügepartner verlaufende Kette von Fügepunkten in der Fügezone erzeugt wird, wobei in der Kette aufeinanderfolgende Fügepunkte überlappen. Erfindungsgemäß ist vorgesehen, dass bei dem Fügen die Fügepunkte mittels WIG-Pulsschweißen mit einer Lichtbogenzeit von bis zu 100 ms erzeugt werden, wobei ein Lichtbogen eines Schweißpuls des WIG-Pulsschweißens nach Erreichen der Lichtbogenzeit gelöscht wird. Durch das Löschen des Lichtbogens nach Erreichen der Lichtbogenzeit kann beispielsweise eine weitere Wärmeeintragung in die Fügepartner unterdrückt werden. Es kann vorgesehen sein, dass der Lichtbogen nach dem Fügen jedes einzelnen Fügepunkts gelöscht werden kann. In einigen Ausführungsformen können bei dem Fügen die Fügepunkte mittels WIG-Pulsschweißen mit einer Lichtbogenzeit von bis zu 50 ms erzeugt werden.

Die rohrförmigen Fügepartner können beispielsweise zwei Rohrleitungen sein, die im Überlappstoß oder stirnseitig Stoß an Stoß zueinander angerordnet sind. Die beiden Fügepartner können eine Rohrleitung und eine im Überlappstoß auf die Rohrleitung aufgeschobene Muffe oder ein Fitting sein. Umgekehrt kann auch die Muffe oder das Fitting weiblich ausgeführt sein und auf ein männliches Ende einer Rohrleitung aufgeschoben sein.

Die Schweißpunkte bzw. Fügepunkte können dabei vorzugsweise mit einem Schweißstrom (Führungsstrom) von mehr als 100 A erzeugt werden. Vorzugsweise beträgt der Schweißstrom mehr als 200 A und besonders bevorzugt mehr als 250 A. Der Schweißstrom kann null sein, wenn der Lichtbogen gelöscht ist oder wird.

Die Schweißpunkte bzw. Fügepunkte können sequenziell in der Fügezone erzeugt werden. Zwischen dem Erzeugen zeitlich aufeinanderfolgender Schweißpunkte bzw. Fügepunkte kann eine Abkühlzeit eingehalten werden, die mindestens der Lichtbogenzeit entspricht und vorzugsweise mindestens dem Doppelten und besonders bevorzugt mindestens dem Dreifachen der Lichtbogenzeit entspricht. Demgemäß können die zeitlich aufeinanderfolgenden Schweißpunkte mittels sequenziellem Intervallschweißen einzelner Schweißpunkte erzeugt werden.

Aufgrund des Überlapps in der Kette aufeinanderfolgender Fügepunkt kann eine durchgängige Fügenaht erzeugt werden. Bei dem Fügen können die in der Kette aufeinanderfolgenden Fügepunkte mit einer Überlappung von 10 % bis 80 % ihrer jeweiligen Fügefläche erzeugt werden. Bevorzugt beträgt der Überlapp zwischen 20 % und 50 % der Fläche je Fügepunkt

Um die Wärmeableitung aus der Fügezone in die miteinander zu fügenden Fügepartner noch weiter zu verbessern, kann vorgesehen sein, bei dem Fügen die in der endgültigen, die durchgängige Fügenaht bildenden Kette aufeinanderfolgenden Fügepunkte in einer stochastischen Reihenfolge zu erzeugen.

Das Fügen kann für das Erzeugen eines der Fügepunkte das kontaktlose Zünden eines Lichtbogens im Hochfrequenzverfahren zur Erzeugung eines Schweißpunkts bzw. Fügepunkts aufweisen.

Nach dem kontaktlosen Zünden des Lichtbogens und nach dem Löschen des kontaktlos gezündeten Lichtbogens kann das Verstellen einer Schweißelektrode entlang der Fügezone um ein ganzteiliges Vielfaches einer Schrittweite vorgesehen sein. Die Schrittweite kann bei gegebenen Schweißpunktdurchmesser mindestens 10 %, bevorzugt mindestens 15 %, und besonders bevorzugt mindestens 20 % kleiner als der Schweißpunktdurchmesser sein.

Bei dem Fügen insbesondere mittels WIG-Pulsschweißen kann als Führungsgröße die Schweißenergie für das Erzeugen eines der Schweißpunkte bzw. Fügepunkte verwendet werden. Dazu kann das Verfahren das kontinuierliche oder iterative Bestimmten der Momentanleistung einer Schweißenergiequelle während des Erzeugen eines Schweißpunkts bzw. Fügepunkts und das Aufintegrieren der dabei bestimmten Momentanleistungen über die Zeit aufweisen. Eine Abtastrate für das Bestimmen der Momentanleistung kann vorzugsweise mehr als 10 kHz betragen.

Die Schweißenergiequelle kann unterbrochen werden, wenn die aufintegrierte Momentanleistung eine Fügepunktzielenergie erreicht. Auf diese Weise kann die in die miteinander zu fügenden Fügepartner eingebrachte Wärmeenergie in Kenntnis der übrigen Materialeigenschaften der Fügepartner reguliert und damit die Ausbildung unerwünschter Anlauffarben besonders effektiv unterdrückt werden.

Vor dem Fügen kann das Verfahren das Bereitstellen einer Nahtvorbereitung aufweisen, wobei mindestens einer der beiden rohrförmigen Fügepartner mit einer Zusatzmaterialanformung an einer der Fügezone zugewandten Stirnseite bereitgestellt wird. Dabei kann eine Nahtvorbereitung bereitgestellt werden, bei der die Zusatzmaterialanformung einen rechteckigen oder dreieckigen Materialabsatz aufweist, der vorzugsweise Abmessungen im Bereich von 10 - 60 % der Wandstärke des die Zusatzmaterialanformung (6) aufweisenden rohrförmigen Fügepartners (1) aufweist.

Das Fügen kann das Regeln eines Schweißstromes beim WIG-Pulsschweißen aufweisen, wobei der Schweißstrom einen Sollpulsverlauf verfolgt, der die folgenden Sollpulsphasen aufweist:
a. Einregeln des Schweißstromes auf das Null- bis Zweifache der Energiephasenstromhöhe während einer Startphasendauer, die dem Null- bis Zweifachen der Energiephasendauer entspricht, danach
b. Erhöhen des Schweißstroms auf eine Energiephasenstromhöhe von 80 bis 400 A während einer Energiephasendauer zwischen 5 und 45 ms; und danach
c. Absenken des Schweißstroms auf das Null- bis Zweifache der Energiephasenstromhöhe während einer Endphasendauer, die dem Null- bis Zweifachen der Energiephasendauer entspricht.

Gemäß einem anderen Aspekt wird ein Schweißgerät zur Durchführung des zuvor beschriebenen Verfahrens vorgeschlagen, das eine Schweißenergiequelle mit mindestens einer Schweißelektrode und eine Mess- und Steuereinheit aufweist, wobei die mindestens eine Schweißelektrode von einem Antrieb des Schweißgeräts auf einer Kreisbahn geführt ist. Das Schweißgerät zeichnet sich dadurch aus, dass die mindestens eine auf einer Kreisbahn geführte Schweißelektrode dazu eingerichtet ist, eine Schweißnaht aus in Umfangsrichtung zweier miteinander zu fügender metallischer, rohrförmiger Fügepartner verlaufende Kette von Schweißpunkten zu erzeugen, derart, dass in der Kette aufeinander folgende Schweißpunkte überlappen. Das Schweißgerät kann demnach nach Art eines Orbitalschweißgeräts ausgebildet sein, ist jedoch nicht auf solche Ausführungsformen beschränkt.

Die Schweißenergiequelle kann mehrere Schweißelektroden aufweisen, die entlang der Kreisbahn zueinander beabstandet angeordnet sind. Die mehreren Schweißelektroden könnte unter einem festen oder unter einem einstellbaren Abstand zueinander angeordnet sein. Insbesondere können die verschiedenen Schweißelektroden einzeln ansteuerbar sein, insbesondere unabhängig voneinander mit einem Schweißstrom beaufschlagt werden.

Die mindestens eine Schweißelektrode kann beim Überlappstoß der rohrförmigen Fügepartner unter einem Neigungswinkel zwischen 45° und 55° zu den parallelen Außenseiten der Fügepartner angeordnet sein. Vorzugsweise kann die Schweißelektrode in Bezug auf einen Kehlenfußpunkt der Fügezone einen Seitenoffset von 0,3 bis 0,7 mm oder 30 - 70% der Wandstärke eines der beiden röhrenförmigen Fügepartner senkrecht zur Außenseite des männlichen Fügepartners und einen Höhenoffset von 0,2 bis 0,8 mm, bevorzugt von 0,2 bis 0,6 mm, oder 20 - 60% der Wandstärke eines der beiden röhrenförmigen Fügepartner senkrecht zur der Fügezone zugewandten Stirnseite des weiblichen Fügepartners aufweisen.

Der Antrieb kann einen Schrittantrieb mit einer Schrittweite in Umfangsrichtung der Fügepartner aufweisen, die bei gegebenem Schweißpunktdurchmesser mindestens 10 %, vorzugsweise mindestens 15 %, besonders bevorzugt mindestens 20% kleiner als der Schweißpunktdurchmesser ist.

Des Weiteren kann das Schweißgerät einen Netzstromanschluss oder einen Akku als Energiequelle, einen Schweißumrichter zur Erzeugung kurzer Schweißstromimpulse, eine HF-Zündung für den Lichtbogen, eine mit einem Motor über ein Getriebe orbital bewegliche Schweißelektrode in einem Schweißkopf, der die rohrförmigen, miteinander zu fügenden Fügepartner aufnimmt, und einen Behälter mit einem Ventil für die Zuführung eines Schutzgases aufweisen. Der Schweißkopf kann auch als Positionierwerkzeug für das definierte, relative Zuführen und Anordnen der Fügepartner zueinander und zur Umsetzung und Einhaltung schweißtechnischer Parameter dienen. Der Schweißkopf kann so ausgeführt sein, dass er bezüglich variierender Anwendungen umgerüstet werden kann. Das Schweißgerät kann eine Steuereinheit aufweisen, die dazu eingerichtet ist, das Umspülen der Fügezone mit einem Schutzgas an einer Außenseite der miteinander zu fügenden Fügepartner zu gewährleisten. Die Steuereinheit kann weiterhin dazu eingerichtet sein, das Umspülen der Fügestelle mit Schutzgas von außen sowie die Auslösung der Schweißimpulse sowie die Bewegung der Schweißelektrode in geeigneter räumlicher und zeitlicher Verteilung orbital entlang der Fügezone zu gewährleisten. Das Schweißgerät kann grundsätzlich als mobiles, in der Hand haltbares Schweißgerät oder als ein stationäres Gerät ausgebildet sein.

Weitere Einzelheiten der Erfindung werden anhand der nachstehenden Figuren erläutert. Dabei zeigt:
- Figur 1: in schematischer Darstellung die Ausbildung eines Fügepunktes;
- Figur 2: den Leistungs-, Strom- und Energieverlauf während eines WIG-Schweißpulses;
- Figur 3: in schematischer Darstellung, die räumliche Anordnung einer Schweißenergiequelle in Bezug auf im Überlappstoß zueinander angeordneter Fügepartner;
- Figur 4: ein vereinfachtes Schaltbild einer beispielhaften Ausführungsform eines Schweißgeräts; und
- Figur 5: in schematischer Darstellung die Funktionsgruppen einer beispielhaften Ausführungsform eines erfindungsgemäßen Schweißgeräts.

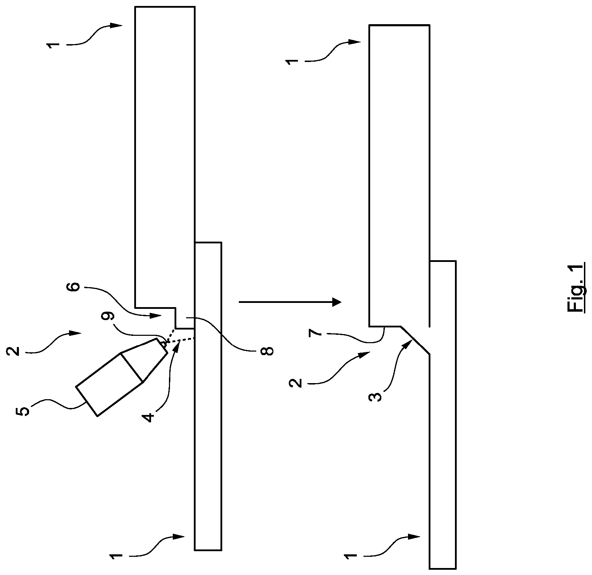

Die Figur 1 zeigt in schematischer Darstellung die Ausbildung eines Fügepunktes 3. Die beiden miteinander zu verbindenden Fügepartner 1 sind im Überlappstoß zueinander angeordnet, wobei ein männlicher Fügepartner 1 zumindest abschnittsweise in den weiblichen Fügepartner 1 hineinragt. Der Außendurchmesser des männlichen Fügepartners 1 entspricht dabei im Wesentlichen dem Innendurchmesser des weiblichen Fügepartners 1. Zur Bereitstellung eines Zusatzmaterials für die Erzeugung des Fügepunktes 3 weist der weibliche Fügepartner 1 an seiner dem männlichen Fügepartner 1 zugewandten Stirnseite 7 eine Zusatzmaterialanformung 6 auf, die bei dem nachfolgenden WIG-Pulsschweißen aufschmilzt und zur Ausbildung des Fügepunktes 3 eine stoffschlüssige Verbindung mit den beiden Fügepartnern 1 eingeht.

Die Zusatzmaterialanformung 6 ist als ein Materialabsatz 8 an der Stirnseite 7 bereitgestellt. Dazu kann der Außendurchmesser des weiblichen Fügepartners 1 im Bereich der Zusatzmaterialanformung 6 gegenüber dem übrigen Außendurchmesser des weiblichen Fügepartners 1 reduziert sein, beispielsweise um ca. zwei Drittel der Wandstärke des weiblichen Fügepartners 1. Der Materialabsatz 8 bedingt, dass der weibliche Fügepartner 1 mit seinem Innenumfang, mit dem er mit dem Außenumfang des männlichen Fügepartners 1 in Kontakt steht, eine größere axiale Überlappung mit dem männlichen Fügepartner 1 im Vergleich zu seinem Außenumfang aufweist.

Die Geometrie der beiden Fügepartner 1 in der Fügezone 2 kann somit derart gestaltet sein, dass durch die Geometrie und Massenverteilung eines der beiden Fügepartner 1 der Aufschmelzprozess durch die resultierende Wärmeführung und Wärmekonzentration beeinflusst wird und damit ein definiertes Grundwerkstoffdepot als Zusatzwerkstoffersatz genutzt werden kann. Beispielsweise kann hierzu, wie in Figur 1 dargestellt ist, der weibliche Fügepartner 1 den bereits erwähnten rechteckigen oder dreieckigen Materialabsatz 8 aufweisen, der beispielsweise Dimensionen zwischen 0,2 bis 0,6 mm x 0,2 bis 0,6 mm aufweisen kann.

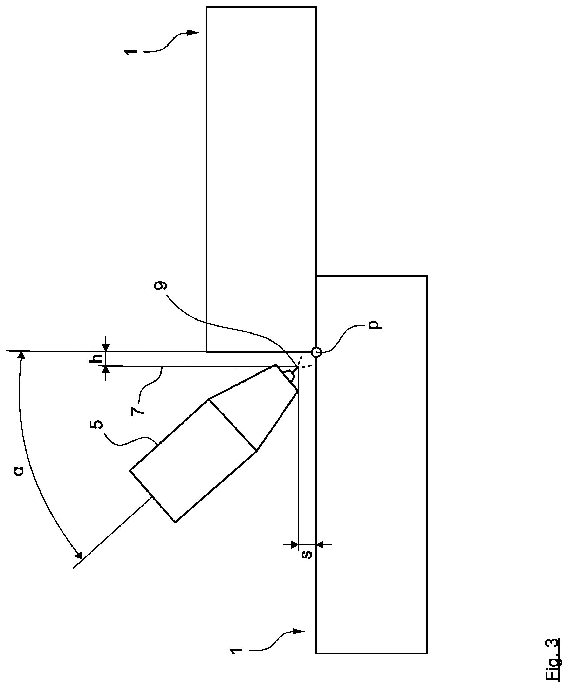

Die Schweißenergiequelle 5 kann beispielsweise eine Energiequelle für das WIG-Pulsschweißen sein. Eine Schweißelektrode 9 der Schweißenergiequelle 5 kann unter einem spitzen Winkel (vgl. Winkel α in Figur 3), beispielsweise unter einem 45°-Winkel zu der Stirnseite 7 des weiblichen Fügepartners 1 angeordnet sein. Wie in Figur 3 gezeigt ist, kann neben dem Winkel α der Elektrode 9 in Bezug auf die Stirnseite 7 des weiblichen Fügepartners 1 die Elektrode 9 einen Seitenoffset s und einen Höhenoffset h in Bezug auf einen Kehlenfußpunkt P einhalten. Der Seitenoffset s kann beispielsweise zwischen 0,3 und 0,7 mm oder 30 - 70% der Wandstärke eines der beiden röhrenförmigen Fügepartner betragen. Vorzugsweise beträgt der Seitenoffset s 0,5 mm. Der Höhenoffset h kann beispielsweise zwischen 0,2 und 0,6 mm oder 20 - 60% der Wandstärke eines der beiden röhrenförmigen Fügepartner betragen. Vorzugsweise beträgt der Höhenoffset h 0,4 mm. Der Seitenoffset s und der Höhenoffset h werden insbesondere von den gewählten Fügepartnern abhängen, insbesondere von den Materialien der Fügepartner, deren Durchmessern sowie deren Wandstärken.

Es ist vorgesehen, dass bei dem Fügen einzelne Fügepunkte erzeugt werden, die mit einer Überlappung eine Kette zusammenhängender Fügepunkte und damit eine durchgängige, stoffschlüssige Verbindung zwischen den Fügepartnern 1 bilden. Die Überlappung kann beispielsweise 20 % bis 50 % der jeweiligen Schweißpunktfläche betragen. Die Reihenfolge, in welcher die Schweißpunkte entlang des Außenumfangs in der Fügezone erzeugt werden, kann sowohl hinsichtlich der räumlichen Verteilung als auch der zeitlichen Abfolge der Erzeugung der Schweißpunkte variabel von den miteinander zu verbindenden Fügepartnern 1 eingestellt werden. Insbesondere ist es nicht zwingend erforderlich, dass die einzelnen Schweißpunkte in der Reihenfolge erzeugt werden, in welcher sie in der am Ende des vollständigen Fügeprozesses erzeugten, die durchgängige Schweißnaht bildenden Kette einzelner Schweißpunkte zueinander angeordnet sind.

Insbesondere die Unterdrückung von Anlauffarben kann dadurch noch weiter verbessert werden, dass zwischen aufeinanderfolgend hergestellten Schweißpunkten ein möglichst großer räumlicher Abstand eingehalten ist. Die zeitliche Abfolge der Erzeugung zeitlich aufeinanderfolgender Schweißpunkte kann von den Wärmeleiteigenschaften der Fügepartner abhängen. Unter weiterer Berücksichtigung der beim Erzeugen der Fügepunkte eingebrachten Wärmeenergien in Verbindung mit der räumlichen Anordnung im Fügeprozess aufeinanderfolgender Schweißpunkte, beispielsweise abhängig vom Abstand dieser entlang des Außenumfangs der Fügepartner, kann ein zeitlicher Abstand gewählt werden, welcher die effektive Unterdrückung von Anlauffarben gewährleistet.

Wenn der männliche Fügepartner 1 beispielsweise ein Rohr aus V2A-Stahl mit einem Durchmesser von 28 mm und eine Wandstärke von einem Millimeter und der weibliche Fügepartner eine Muffe aus demselben Material mit einer Wandstärke von 1,2 mm ist, können für das Fügen mittels WIG-Pulsschweißen der beiden Fügepartner 1 ein Schweißlinsendurchmesser von 2,5 mm und ein Führungsstrom von 280 A bei einer Pulsdauer von 25 ms und einer Fügepunktzielenergie von 25 J vorgesehen werden. Der Neigungswinkel α gemäß Figur 3 relativ zur Stirnseite 7 kann beispielsweise 50° bei einem Höhenoffset h von 0,5 mm und einem Seitenoffset s von 0,4 mm betragen. Hierbei können aufeinanderfolgende Schweißpunkte zur Maximierung der Wärmeableitung der Pulsenergie in die Fügepartner an gegenüberliegenden Seiten am Außenumfang der Fügezone angeordnet sein.

Demgemäß können die Schweißpunkte beispielsweise mit Hilfe des WIG-Pulsschweißens erzeugt werden, wobei die beiden Fügepartner 1 durch kurze Schweißpulse mit einer Lichtbogenzeit von maximal 50 ms lokal aufgeschmolzen und dadurch stoffschlüssig miteinander verbunden werden. Für das Fügen von Kupfer können auch Lichtbogenbrennzeit von maximal 300 ms in Betracht gezogen werden, wobei die Lichtbogenbrennzeit bevorzugt bis 20 ms beträgt, beispielsweise für CrNi, oder bis 100 ms, beispielsweise für Cu. Es kann mit und ohne Zusatzwerkstoff gearbeitet werden. Der Lichtbogen des Schweißpulses kann mit Hilfe des HF-Verfahrens kontaktlos gezündet werden. Nach Erreichen der Lichtbogenzeit erlöscht der Schweißpuls, um die weitere Wärmeeintragung in die Fügepartner 1 zu unterdrücken. In anderen Worten wird der Lichtbogen des Schweißpuls des WIG-Pulsschweißens nach Erreichen der Lichtbogenzeit gelöscht. Es kann vorgesehen sein, dass der Lichtbogen nach dem Fügen jedes einzelnen Fügepunkts unterbrochen und/oder gelöscht werden kann. Der Schweißstrom kann null sein, wenn der Lichtbogen gelöscht ist oder wird.

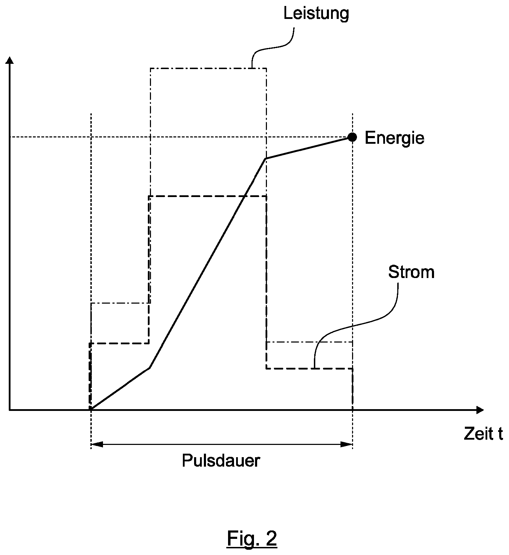

Die geregelte Größe beim WIG-Schweißen ist der Schweißstrom, welcher einem definierten Sollpulsverlauf folgen kann. Dieser ist mit Bezug auf Figur 2 veranschaulicht und in eine Startphase, eine Energiephase und eine Endphase unterteilt. Die Startphase weist eine Stromhöhe auf, die dem 0- bis 2-fachen der Energiephasenstromhöhe entspricht, wobei die Startphasendauer dem 0- bis 2-fachen der Energiephasendauer entspricht. Die Energiephase weist eine Energiephasenstromhöhe von 80 bis 400 A und eine Energiephasendauer von 5 ms bis 45 ms auf. Die Endphase weist eine Stromhöhe auf, die dem 0- bis 2-fachen der Energiephasenstromhöhe entspricht, bei einer Endphasendauer, die dem 0- bis 2-fachen der Energiephasendauer entspricht.

Die Startphase dient dem Etablieren des Lichtbogens und zur Aktivierung der Oberflächen der Fügepartner. Die Energiephase dient dem Transport der Aufschmelzenergie in die Fügezone, während die Endphase für die Nachwärmung der Schmelzzone vorgesehen ist, ohne dass dabei das Schmelzbad vergrößert wird. Die Schweißspannung stellt sich den geometrischen und physikalischen Randbedingungen entsprechend ein.

Die Stromformung über den Pulsverlauf führt unter Berücksichtigung und Einhaltung technologischer Parameter (Brennerposition, Elektrodenabstand zum Werkstück etc.) zu einer Energieführung, die es erlaubt, dass die sich ausbildende und lokal begrenzte Metallschmelze durch konduktive Wärmeableitung in den verbleibenden Feststoff und durch Wärmeabgabe an das nachströmende Schutzgas und die Atmosphäre instantan unterkühlt und erstarrt. Zudem kann durch das HF-Verfahren ein ungewolltes Festhaften der Elektrode während des Zündens des Lichtbogens auf der Werkstückoberfläche verhindert und der Elektrodenverschleiß damit reduziert werden.

Durch die hohen Temperaturgradienten in das umliegende Material werden sicher hohe Abkühlgeschwindigkeiten erreicht, sodass die Innenseite des Rohres nicht thermisch aktiviert wird und damit Oxidation und Anlauffarben vermieden werden. Die übergeordnete Führungsgröße für die Erstellung eines Schweißpunktes ist somit die für die Erzeugung des einzelnen Schweißpunktes aufgebrachte Energie, welche als Integral der Momentanleistung als Produkt von Schweißstrom und Schweißspannung durch den Lichtbogen als Energiewandler umgesetzt wird. Es kann vorgesehen sein, dass während der Erzeugung des Schweißpunktes, d.h. beispielsweise während eines Schweißpulses in-situ die Momentanleistung des Lichtbogens mit einer Abtastrate von mehr als 10 kHz und das kontinuierliche Bilden des Integrals über die Zeit erfasst werden. Der Schweißpuls kann demgemäß genau dann beendet werden, wenn die Schweißpunktzielenergie erreicht wird.

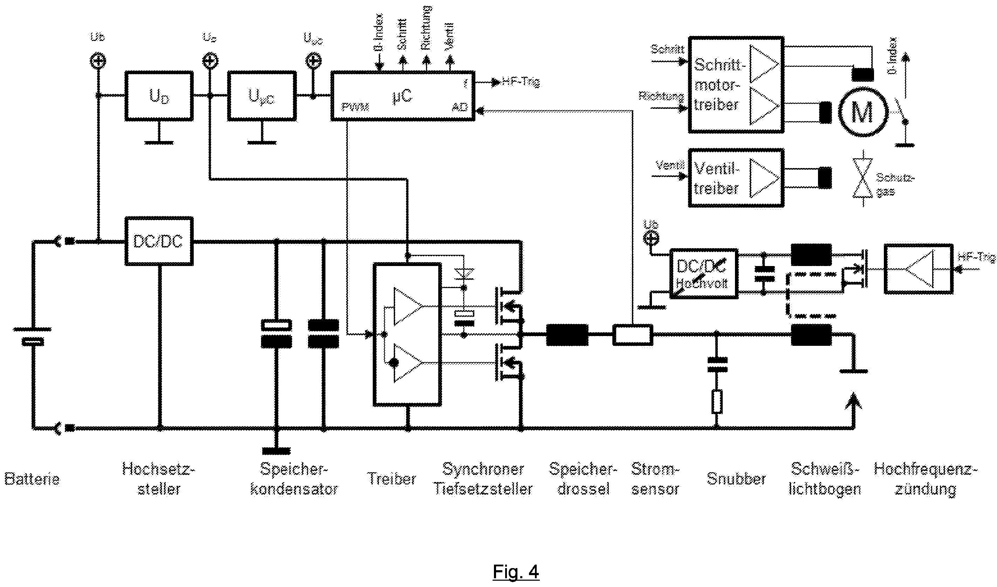

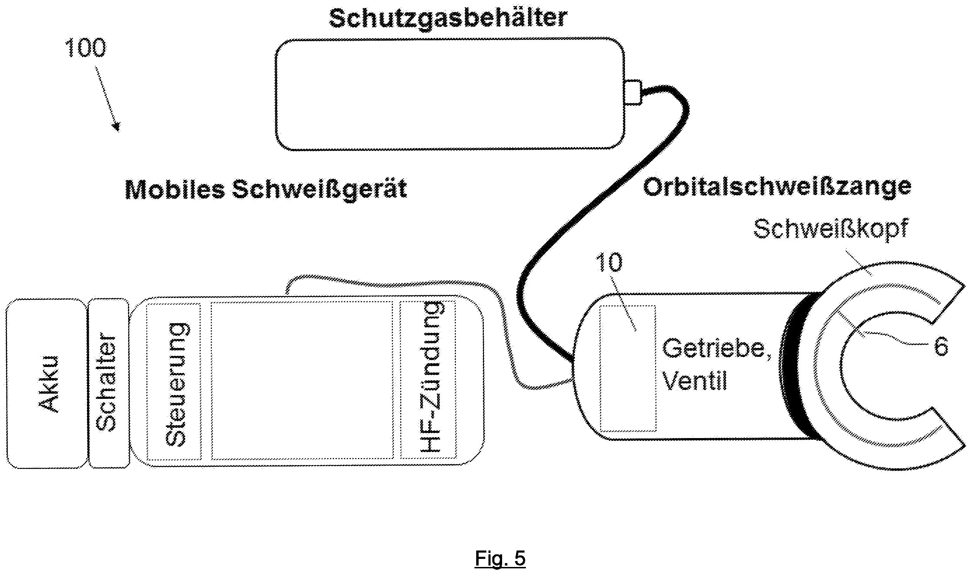

Wie in den Figuren 4 und 5 gezeigt ist, kann zur Implementierung des erfindungsgemäßen Verfahrens ein Schweißgerät 100 vorgesehen sein, welches beispielsweise als ein mobiles Schweißgerät, d.h. eine in sich abgeschlossene, einfach transportierbare Vorrichtung ausgebildet sein kann. Das Schweißgerät 100 kann einen Netzstromanschluss oder einen Akku als Energiequelle, einen Schweißumrichter zur Erzeugung kurzer Schweißstromimpulse, eine Mess- und Steuereinheit, welche die Schweißparameter vorhält und den Prozess überwacht und regelt, eine HF-Zündung des Lichtbogens, mindestens eine mit einem Motor über ein Getriebeorbital bewegliche Schweißelektrode in einem Schweißkopf, der die beiden Fügepartner, beispielsweise ein Rohrende und einen Fitting, aufnimmt, sowie einen Behälter mit einem Ventil für die Zuführung eines Schutzgases aufweisen.

Der Schweißkopf dient auch als Positionierwerkzeug, um die beiden Fügepartner reproduzierbar in einer relativen Ausrichtung zueinander anzuordnen, beispielsweise im Überlappstoß unter Einhaltung eines vorgegebenen Überlappmaßes. Dabei kann eine axiale und exzentrische Toleranz von 100 µm eingehalten werden. Der Schweißkopf ist weiterhin dazu eingerichtet, die Schweißelektrode zur Umsetzung und Einhaltung der geometrischen Positionierungsparameter für den Ablauf des Schweißprozesses zur Ausbildung der Schweißpunktkette umzusetzen. Die geometrischen Positionierungsparameter können der Neigungswinkel der Elektrode 6 in Bezug auf die Fügezone, der bereits zuvor genannte Seitenoffset sowie der Höhenoffset sein (vgl. Figur 3).

Der Schweißkopf kann modular ausgeführt sein, sodass er bezüglich variierender Anwendungen umgerüstet werden kann, beispielsweise zur Abdeckung unterschiedlicher Durchmesserbereiche der miteinander zu fügenden rohrförmigen Fügepartner. Die Steuerung des Schweißgerätes 100 koordiniert das Umspülen der Fügezone mit Schutzgas, die Auslösung der Schweißimpulse sowie die Bewegung der Schweißelektrode in geeigneter räumlicher und zeitlicher Verteilung orbital um die Fügezone.

Es werden somit ein einfaches und baustellentaugliches Schweißverfahren sowie ein entsprechendes Schweißgerät für Rohrverbindungen bereitgestellt. Mit Hilfe des Verfahrens ist es möglich, in kurzer Zeit mechanisch feste und fluidisch dichte Rohrverbindungen herzustellen. Zudem erlaubt es das Verfahren, dass das Schweißgerät in kompakter Bauweise bereitgestellt werden kann und damit einen geringen Aufwand hinsichtlich Transport und Bedienung auf der Baustelle sicherstellt.

Unter Berücksichtigung der thermischen Werkstoff- und Werkstückeigenschaften sowie durch gezielte Modulation des Strom- und Leistungsverlaufs kann der Energieeintrag und dessen räumliche Verteilung beim Schweißen so optimiert werden, dass in Folge die mittlere und transiente Energieeinbringung so gestaltet sind, dass effektiv auf das Füllen der Rohrleitungen mit Formiergas oder Schutzgas zum Unterdrücken von Anlauffarben verzichtet werden kann. Dies hat im Übrigen den großen Vorteil, dass die einschlägigen Verordnungen bezüglich des Brandschutzes auf der Baustelle unter geringerem Aufwand eingehalten werden können.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Fügepartner
- 2: Fügezone
- 3: Fügepunkt
- 4: Lichtbogen
- 5: Schweißenergiequelle
- 6: Zusatzmaterialanformung
- 7: Stirnseite
- 8: Materialabsatz
- 9: Schweißelektrode
- 10: Antrieb
- 100: Schweißgerät
- α: Neigungswinkel
- h: Höhenoffset
- s: Seitenoffset
- P: Kehlenfußpunkt

## Patentansprüche

1. Verfahren zum Fügen zweier metallischer, rohrförmiger Fügepartner (1) miteinander, wobei das Verfahren das überlappende oder stirnseitige Anordnen zweier metallischer, rohrförmiger Fügepartner (1) zueinander und das stoffschlüssige Fügen der Fügepartner (1) entlang einer Fügezone (2) der Fügepartner (1) aufweist, wobei bei dem Fügen eine in Umfangsrichtung der Fügepartner (1) verlaufende Kette von Fügepunkten (3) in der Fügezone (2) erzeugt wird, wobei in der Kette aufeinanderfolgende Fügepunkte (3) überlappen, **dadurch gekennzeichnet, dass** bei dem Fügen die Fügepunkte (3) mittels WIG-Pulsschweißen mit einer Lichtbogenzeit von bis zu 100 ms, bevorzugt von bis zu 50 ms, erzeugt werden, wobei ein Lichtbogen eines Schweißpuls des WIG-Pulsschweißens nach Erreichen der Lichtbogenzeit gelöscht wird.

2. Verfahren nach Anspruch 1, bei dem die Fügepunkte (3) mit einem Schweißstrom von mehr als 100 A erzeugt werden.

3. Verfahren nach einem der vorangegangenen Ansprüche, bei dem die Fügepunkte (3) sequentiell in der Fügezone (2) erzeugt werden, wobei zwischen dem Erzeugen zeitlich aufeinanderfolgender Fügepunkte (3) eine Abkühlzeit eingehalten wird, die mindestens der Lichtbogenzeit entspricht, vorzugsweise mindestens dem Doppelten der Lichtbogenzeit, besonders bevorzugt mindestens dem Dreifachen.

4. Verfahren nach einem der vorangegangen Ansprüche, bei dem bei dem Fügen die in der Kette aufeinanderfolgenden Fügepunkte (3) mit einer Überlappung von 20 % bis 50 % ihrer jeweiligen Fügefläche erzeugt werden.

5. Verfahren nach einem der vorangegangenen Ansprüche, bei dem bei dem Fügen die in der Kette aufeinanderfolgenden Fügepunkte (3) in einer stochastischen Reihenfolge erzeugt werden.

6. Verfahren nach einem der vorangegangen Ansprüche, bei dem das Fügen für das Erzeugen eines der Fügepunkte (3) das kontaktlose Zünden eines Lichtbogens (4) im Hochfrequenzverfahren aufweist.

7. Verfahren nach Anspruch 6, das nach dem kontaktlosen Zünden des Lichtbogens und nach dem Löschen des kontaktlos gezündeten Lichtbogens (4) das Verstellen einer Schweißelektrode (9) entlang der Fügezone (2) um ein ganzzahliges Vielfaches einer Schrittweite aufweist, die bei gegebenem Fügepunktdurchmesser mindestens 10 %, vorzugsweise mindestens 15 % und besonders bevorzugt mindestens 20 % kleiner als der Fügepunktdurchmesser ist.

8. Verfahren nach einem der vorangegangenen Ansprüche, bei dem bei dem Fügen als Führungsgröße die Schweißenergie für das Erzeugen eines der Fügepunkte (3) verwendet wird, wozu das Verfahren das kontinuierliche oder iterative Bestimmen der Momentanleistung einer Schweißenergiequelle (5) und das Aufintegrieren der bestimmten Momentanleistung über die Zeit aufweist, wobei eine Abtastrate für das Bestimmen der Momentanleistung vorzugsweise mehr als 10 kHz beträgt.

9. Verfahren nach Anspruch 8, bei dem die Schweißenergiequelle (5) unterbrochen wird, wenn die aufintegrierte Momentanleistung eine Fügepunktzielenergie erreicht.

10. Verfahren nach einem der vorangegangenen Ansprüche, das vor dem Fügen das Bereitstellen einer Nahtvorbereitung aufweist, wobei mindestens einer der beiden rohrförmigen Fügepartner (1) mit einer Zusatzmaterialanformung (6) an einer der Fügezone (2) zugewandten Stirnseite (7) aufweist, wobei die Zusatzmaterialanformung (6) vorzugsweise in die Fügezone (2) hineinragt.

11. Verfahren nach Anspruch 10, bei dem eine Nahtvorbereitung bereitgestellt wird, bei der die Zusatzmaterialanformung (6) einen rechteckigen oder dreieckigen Materialabsatz (8) aufweist, der vorzugsweise Abmessungen im Bereich von 10 - 60 % der Wandstärke des die Zusatzmaterialanformung (6) aufweisenden rohrförmigen Fügepartners (1) aufweist.

12. Verfahren nach einem der vorangegangenen Ansprüche, bei dem das Fügen das Regeln eines Schweißstroms beim WIG-Pulsschweißen aufweist, wobei der Schweißstrom einem Sollpulsverlauf folgt, der die folgenden Sollpulsphasen aufweist:
a. Einregeln des Schweißstromes auf das Null- bis Zweifache der Energiephasenstromhöhe während einer Startphasendauer, die dem Null- bis Zweifachen der Energiephasendauer entspricht, danach
b. Erhöhen des Schweißstroms auf eine Energiephasenstromhöhe von 80 bis 400 A während einer Energiephasendauer zwischen 5 und 45 ms; und danach
c. Absenken des Schweißstroms auf das Null- bis Zweifache der Energiephasenstromhöhe während einer Endphasendauer, die dem Null- bis Zweifachen der Energiephasendauer entspricht.

13. Schweißgerät (100) zur Durchführung des Verfahrens nach einem der vorangegangenen Ansprüche, wobei das Schweißgerät (100) eine Schweißenergiequelle (5) mit mindestens einer Schweißelektrode (9), und eine Mess- und Steuereinheit aufweist, wobei die mindestens eine Schweißelektrode (9) von einem Antrieb (10) des Schweißgeräts (100) auf einer Kreisbahn geführt ist, wobei die mindestens eine auf einer Kreisbahn geführte Schweißelektrode (9) dazu eingerichtet ist, eine Schweißnaht aus in Umfangsrichtung zweier miteinander zu fügender metallischer, rohrförmiger Fügepartner (1) verlaufende Kette von Fügepunkten (3) zu erzeugen, derart, dass in der Kette aufeinander folgende Fügepunkte (3) überlappen, **dadurch gekennzeichnet, dass** das Schweißgerät (100) dazu eingerichtet ist, die Fügepunkte (3) mittels WIG-Pulsschweißen mit einer Lichtbogenzeit von bis zu 100 ms, bevorzugt von bis zu 50 ms, zu erzeugen, wobei ein Lichtbogen eines Schweißpuls des WIG-Pulsschweißens nach Erreichen der Lichtbogenzeit gelöscht wird.

14. Schweißgerät (100) nach Anspruch 13, bei dem die Schweißenergiequelle (5) mehrere, vorzugsweise einzeln ansteuerbare Schweißelektroden (9) aufweist, die entlang der Kreisbahn zueinander beabstandet angeordnet sind, wobei die Schweißelektroden (9) vorzugsweise unter einem festen oder unter einem einstellbaren Abstand zueinander angeordnet sind.

15. Schweißgerät (100) nach Anspruch 13 oder 14, bei dem die Schweißelektrode (9) beim Überlappstoß der röhrenförmigen Fügepartner (1) unter einem Neigungswinkel (a) zwischen 35° und 55° zu den parallelen Außenseiten der Fügepartner (1) angeordnet ist und vorzugsweise in Bezug auf einen Kehlenfußpunkt (P) der Fügezone (2) einen Seitenoffset (s) von 30 - 70% der Wandstärke eines der beiden röhrenförmigen Fügepartner (1) senkrecht zur Außenseite des männlichen Fügepartners (1) und einen Höhenoffset (h) von 0,2 - 0,8 mm, bevorzugt von 0,2 - 0,6 mm, senkrecht zur der Fügezone (2) zugewandten Stirnseite des weiblichen Fügepartners (1) aufweist.

16. Schweißgerät (100) nach einem der Ansprüche 13 bis 15, bei dem der Antrieb (10) einen Schrittantrieb mit einer Schrittweite aufweist, die bei gegebenem Fügepunktdurchmesser mindestens 10 %, vorzugsweise mindestens 15 % und besonders bevorzugt mindestens 20 % kleiner als der Fügepunktdurchmesser ist.

## Claims

1. Method for joining two metallic, tubular joining members (1) to one another, the method comprising: arranging two metallic, tubular joining members (1) with respect to one another in an overlapping or end-face manner, and joining the joining members (1) by material bond along a joining zone (2) of the joining members (1), wherein, in the joining, a chain of joining spots (3) extending in the circumferential direction of the joining members (1) is produced in the joining zone (2), wherein successive joining spots (3) in the chain overlap, **characterized in that**, in the joining, the joining spots (3) are produced by means of TIG pulse welding with an arc time of up to 100 ms, preferably of up to 50 ms, wherein an arc of a welding pulse of the TIG pulse welding is extinguished after the arc time has been reached.

2. Method according to claim 1, in which the joining spots (3) are produced with a welding current of more than 100 A.

3. Method according to one of the preceding claims, in which the joining spots (3) are produced sequentially in the joining zone (2), wherein a cooling time is maintained between the production of joining spots (3) following one another in time, which cooling time corresponds to at least the arc time, preferably at least twice the arc time, particularly preferably at least three times the arc time.

4. Method according to one of the preceding claims, in which, in the joining, the joining spots (3) following one another in the chain are produced with an overlap of 20 % to 50 % of their respective joining area.

5. Method according to one of the preceding claims, in which, in the joining, the joining spots (3) following one another in the chain are generated in a stochastic sequence.

6. Method according to any one of the preceding claims, wherein the joining for producing one of the joining spots (3) comprises the contactless ignition of an arc (4) in a high-frequency process.

7. Method according to claim 6, which, after the contactless ignition of the arc and after the extinguishing of the contactlessly ignited arc (4), comprises: displacing a welding electrode (9) along the joining zone (2) by an integer multiple of a step width, which step width, for a given joining spot diameter, is at least 10%, preferably at least 15% and particularly preferably at least 20% smaller than the joining spot diameter.

8. Method according to any one of the preceding claims, wherein, in the joining, the welding energy for generating one of the joining spots (3) is used as a reference variable, for which the method comprises continuously or iteratively determining of the instantaneous power of a welding energy source (5) and integrating of the determined instantaneous power over time, wherein a sampling rate for determining the instantaneous power is preferably more than 10 kHz.

9. Method according to claim 8, wherein the welding energy source (5) is interrupted when the integrated instantaneous power reaches a joining spot target energy.

10. Method according to one of the preceding claims, which, before the joining, comprises: providing a seam preparation, wherein at least one of the two tubular joining members (1) has an additional material shaping (6) on an end face (7) facing the joining zone (2), wherein the additional material shaping (6) preferably projects into the joining zone (2).

11. Method according to claim 10, in which a seam preparation is provided, in which the additional material shaping (6) has a rectangular or triangular material shoulder (8), which preferably has dimensions in the range of 10 - 60% of the wall thickness of the tubular joining member (1) having the additional material shaping (6).

12. Method according to any one of the preceding claims, wherein the joining comprises: controlling a welding current in TIG pulse welding, wherein the welding current follows a target pulse profile comprising the following target pulse phases:
a. adjusting the welding current to zero to two times the energy phase current level during a start phase duration, which start phase duration corresponds to zero to two times the energy phase duration, then
b. increasing the welding current to an energy phase current level of 80 to 400 A during an energy phase duration of between 5 and 45 ms; and then
c. decreasing the welding current to zero to two times the energy phase current level during a final phase duration, the final phase duration corresponding to zero to two times the energy phase duration.

13. Welding apparatus (100) for carrying out the method according to one of the preceding claims, wherein the welding apparatus (100) has a welding energy source (5) with at least one welding electrode (9) and a measuring and control unit, wherein the at least one welding electrode (9) is guided on a circular path by a drive (10) of the welding apparatus (100), wherein the at least one welding electrode (9) guided on a circular path is configured to produce a weld seam of a chain of joining spots (3) running in the circumferential direction of two metallic, tubular joining members (1) to be joined together, in such a way that successive joining spots (3) in the chain overlap, **characterized in that** the welding apparatus (100) is configured to produce the joining spots (3) by means of TIG pulse welding with an arc time of up to 100 ms, preferably of up to 50 ms, wherein an arc of a welding pulse of the TIG pulse welding is extinguished after the arc time has been reached.

14. Welding apparatus (100) according to claim 13, in which the welding energy source (5) has a plurality of welding electrodes (9), the welding electrodes preferably being individually controllable, which welding electrodes are arranged at a distance from one another along the circular path, the welding electrodes (9) preferably being arranged at a fixed or at an adjustable distance from one another.

15. Welding apparatus (100) according to claim 13 or 14, in which, in the lap joint of the tubular joining members (1), the welding electrode (9) is arranged at an angle of inclination (a) of between 35° and 55° to the parallel outer sides of the joining members (1) and, preferably has, with respect to a fillet base point (P) of the joining zone (2), a side offset (s) of 30 - 70% of the wall thickness of one of the two tubular joining members (1) perpendicular to the outside of the male joining member (1) and a height offset (h) of 0.2 - 0.8 mm, preferably of 0.2 - 0.6 mm, perpendicular to the end face of the female joining member (1) facing the joining zone (2).

16. Welding apparatus (100) according to any one of claims 13 to 15, wherein the drive (10) comprises a step drive with a step width which, for a given joining spot diameter, is at least 10 %, preferably at least 15 % and particularly preferably at least 20 % smaller than the joining spot diameter.

## Revendications

1. Procédé d'assemblage de deux partenaires d'assemblage tubulaires métalliques (1) l'un avec l'autre, dans lequel le procédé comprend l'agencement de deux partenaires d'assemblage tubulaires métalliques (1) l'un par rapport à l'autre avec chevauchement ou affrontement et l'assemblage par complémentarité de matière des partenaires d'assemblage (1) le long d'une zone d'assemblage (2) des partenaires d'assemblage (1), dans lequel une chaîne de points d'assemblage (3) s'étendant dans la direction circonférentielle des partenaires d'assemblage (1) lors de l'assemblage est générée dans la zone d'assemblage (2), dans lequel des points d'assemblage (3) se succédant au sein de la chaîne se chevauchent, **caractérisé en ce que**, lors de l'assemblage, les points d'assemblage (3) sont générés au moyen d'un soudage par impulsions TIG avec un temps d'arc électrique allant jusqu'à 100 ms, de manière préférée allant jusqu'à 50 ms, dans lequel un arc électrique d'une impulsion de soudage du soudage par impulsions TIG est éteint après avoir atteint le temps d'arc électrique.

2. Procédé selon la revendication 1, dans lequel les points d'assemblage (3) sont générés avec un courant de soudage supérieur à 100 A.

3. Procédé selon l'une quelconque des revendications précédentes, dans lequel les points d'assemblage (3) sont générés de manière séquentielle dans la zone d'assemblage (2), dans lequel un temps de refroidissement qui correspond au moins au temps d'arc électrique, de manière préférée au moins au double du temps d'arc électrique, de manière particulièrement préférée au moins au triple du temps d'arc électrique, est respecté entre la génération de points d'assemblage (3) se succédant dans le temps.

4. Procédé selon l'une quelconque des revendications précédentes, dans lequel, lors de l'assemblage, les points d'assemblage (3) se succédant au sein de la chaîne sont générés avec un chevauchement compris entre 20 % et 50 % de leur surface d'assemblage respective.

5. Procédé selon l'une quelconque des revendications précédentes, dans lequel, lors de l'assemblage, les points d'assemblage (3) se succédant au sein de la chaîne sont générés dans un ordre stochastique.

6. Procédé selon l'une quelconque des revendications précédentes, dans lequel l'assemblage présente une étape consistant à allumer sans contact un arc électrique (4) selon un procédé à haute fréquence afin de générer un des points d'assemblage (3).

7. Procédé selon la revendication 6, qui, après l'allumage sans contact de l'arc électrique et après l'extinction de l'arc électrique (4) allumé sans contact, présente une étape consistant à déplacer une électrode de soudage (9) le long de la zone d'assemblage (2) à raison d'un multiple entier d'une amplitude de pas qui, pour un diamètre de point d'assemblage donné, est inférieure d'au moins 10 %, de manière préférée d'au moins 15 % et de manière particulièrement préférée d'au moins 20 % au diamètre de point d'assemblage.

8. Procédé selon l'une quelconque des revendications précédentes, dans lequel, lors de l'assemblage, l'énergie de soudage est utilisée comme grandeur de guidage pour la génération d'un des points d'assemblage (3), ce pour quoi le procédé comprend la détermination continue ou itérative de la puissance instantanée d'une source d'énergie de soudage (5) et l'intégration de la puissance instantanée déterminée dans le temps, dans lequel une fréquence d'échantillonnage pour la détermination de la puissance instantanée est de manière préférée supérieure à 10 kHz.

9. Procédé selon la revendication 8, dans lequel la source d'énergie de soudage (5) est interrompue lorsque la puissance instantanée intégrée atteint une énergie cible de point d'assemblage.

10. Procédé selon l'une quelconque des revendications précédentes, qui, avant l'assemblage, comprend une étape consistant à fournir une préparation de cordon, dans lequel au moins un des deux partenaires d'assemblage tubulaires (1) présente une adjonction de matériau supplémentaire (6) au niveau d'une face frontale (7) tournée vers la zone d'assemblage (2), dans lequel l'adjonction de matériau supplémentaire (6) dépasse de manière préférée dans la zone d'assemblage (2).

11. Procédé selon la revendication 10, dans lequel une préparation de cordon est fournie, avec une adjonction de matériau supplémentaire (6) présentant un talon de matériau (8) rectangulaire ou triangulaire présentant de manière préférée des dimensions dans la plage comprise entre 10 et 60 % de l'épaisseur de paroi du partenaire d'assemblage tubulaire (1) présentant l'adjonction de matériau supplémentaire (6).

12. Procédé selon l'une quelconque des revendications précédentes, dans lequel l'assemblage comprend une étape consistant à réguler un courant de soudage lors du soudage par impulsions TIG, dans lequel le courant de soudage suit une courbe d'impulsions de consigne qui comprend les phases d'impulsions de consigne ci-dessous :
a. réglage du courant de soudage à un niveau compris entre zéro et deux fois le niveau de courant de phase d'énergie pendant une durée de phase de démarrage qui correspond à une durée comprise entre zéro et deux fois la durée de la phase d'énergie ; puis
b. augmentation du courant de soudage à un niveau de courant de phase d'énergie compris entre 80 et 400 A pendant une durée de phase d'énergie comprise entre 5 et 45 ms ; et ensuite
c. abaissement du courant de soudage à un niveau compris entre zéro et deux fois le niveau de courant de phase d'énergie pendant une durée de phase finale qui correspond à une durée comprise entre zéro et deux fois la durée de la phase d'énergie.

13. Appareil de soudage (100) permettant de mettre en œuvre le procédé selon l'une quelconque des revendications précédentes, dans lequel l'appareil de soudage (100) présente une source d'énergie de soudage (5) avec au moins une électrode de soudage (9) et une unité de mesure et de commande, dans lequel la au moins une électrode de soudage (9) est guidée par un entraînement (10) de l'appareil de soudage (100) sur une trajectoire circulaire, dans lequel la au moins une électrode de soudage (9) guidée sur une trajectoire circulaire est conçue afin de générer un cordon de soudure à partir d'une chaîne de points d'assemblage (3) s'étendant dans la direction circonférentielle de deux partenaires d'assemblage tubulaires métalliques (1) à assembler, de telle manière que des points d'assemblage (3) se succédant au sein de la chaîne se chevauchent, **caractérisé en ce que** l'appareil de soudage (100) est conçu afin de générer les points d'assemblage (3) au moyen d'un soudage par impulsions TIG avec un temps d'arc électrique allant jusqu'à 100 ms, de manière préférée allant jusqu'à 50 ms, dans lequel un arc électrique d'une impulsion de soudage du soudage par impulsions TIG est éteint après avoir atteint le temps d'arc électrique.

14. Appareil de soudage (100) selon la revendication 13, dans lequel la source d'énergie de soudage (5) présente plusieurs électrodes de soudage (9) qui peuvent de manière préférée être commandées individuellement et qui sont agencées à distance les unes des autres le long de la trajectoire circulaire, dans lequel les électrodes de soudage (9) sont agencées de manière préférée à une distance fixe ou à une distance ajustable les unes des autres.

15. Appareil de soudage (100) selon la revendication 13 ou 14, dans lequel l'électrode de soudage (9) est agencée selon un angle d'inclinaison (a) compris entre 35° et 55° par rapport aux côtés extérieurs parallèles des partenaires d'assemblage (1) lors du chevauchement des partenaires d'assemblage tubulaires (1) et présente de manière préférée, par rapport à un point de fond de gorge (P) de la zone d'assemblage (2), un décalage latéral (s) compris entre 30 et 70 % de l'épaisseur de paroi de l'un des deux partenaires d'assemblage tubulaires (1) de manière perpendiculaire à la face extérieure du partenaire d'assemblage (1) mâle et un décalage en hauteur (h) compris entre 0,2 et 0,8 mm, de manière préférée compris entre 0,2 et 0,6 mm, de manière perpendiculaire à la face frontale du partenaire d'assemblage (1) femelle tournée vers la zone d'assemblage (2).

16. Appareil de soudage (100) selon l'une quelconque des revendications 13 à 15, dans lequel l'entraînement (10) présente un entraînement pas à pas avec une amplitude de pas qui, pour un diamètre de point d'assemblage donné, est inférieure d'au moins 10 %, de manière préférée d'au moins 15 % et de manière particulièrement préférée d'au moins 20 % au diamètre de point d'assemblage.
